# EUROPEAN PATENT APPLICATION

(11) **EP 4 732 674 A1**
(43) Date of publication of application: **29.04.2026**
(21) Application number: 24208423.4
(22) Date of filing: 23.10.2024
(51) Int. Cl.: A23K 10/16, A23K 10/30, A23K 20/158, A23K 50/10

(54) **RUMINANT FEED STOCK AND RUMINANT FEEDING METHOD FOR IMPROVING PRODUCED MILK QUALITY**

(71) Applicant: Agricultural University of Athens (AUA), 1185 Athens (GR)
(72) Inventor: FLEMETAKIS, EMMANOUIL, ATHENS (GR); TSIPLAKOU, ELENI, ATHENS (GR); KALLONIATI, CHRYSANTHI, ATHENS (GR); SKLIROS, DIMITRIOS, ATHENS (GR); MAVROMMATIS, ALEXANDROS, ATHENS (GR); KYRIAKAKI, PANAGIOTA, ATHENS (GR)
(74) Representative: Kosti, Vasiliki

(57) **Abstract**

The present invention relates to ruminant feeds, to methods for making animal feeds that can be introduced to ruminants' daily diet, and to uses of such feeds in feeding methods for improving milk quality produced by ruminants. The animal feeds according to the invention may improve various aspects of milk production in the ruminants. For instance, they can lead to increased concentration of polyunsaturated fatty acids of the produced milk and milk derived dairy products.

## Description

### FIELD OF THE DISCLOSURE

The present invention relates to ruminant feeds, to methods for making animal feeds that can be introduced to ruminants' daily diet, and to uses of such feeds in feeding methods for improving milk quality produced by ruminants. The animal feeds according to the invention may improve various aspects of milk production in the ruminants. For instance, they can lead to increased concentration of polyunsaturated fatty acids of the produced milk and milk derived dairy products.

### BACKGROUND

Public health policies recommend a population wide decrease in the consumption of saturated fatty acids (SFA) to lower the incidence of cardiovascular and metabolic diseases. In most developed countries, milk and dairy products are the major source of SFA in the human diet. Altering milk fat composition offers the opportunity to lower the consumption of SFA without requiring a change in eating habits. On the other hand, the polyunsaturated fatty acids (PUFAs) of dairy products, which are a minority in milk fat (e.g. conjugated linoleic acid, eicosapentaenoic acid (EPA) and docosahexaenoic acid (DHA)), have a positive effect on the health of the consumer, since they contribute to the prevention of atherosclerotic plaques and the regulation of homeostasis insulin, adipogenesis and the immune system (Marventano et al., 2015; Calder, 2014). Therefore, it is desirable to increase the polyunsaturated fatty acid (PUFA) content of milk so that it meets all requirements of a balanced and healthy nutrition. For children who represent a major class of milk consumers, it would also be desirable to increase both the omega-3 (especially DHA, C22:6n-3) and the omega-6 fatty acid content of milk as the eicosanoids from the omega-6 fatty acids are important for growth and DHA is important in brain and nervous system development.

DHA (docosahexaenoic acid) belongs to the ω-3 series of polyunsaturated fatty acids (ω-3 PUFAs). It is an important component of cell membranes and nerve tissues in human. It has the physiology functions of strengthening brain and intelligence, promoting the development of optic nerve, and preventing and treating senile dementia. It also plays an important role in promoting the growth and development of infants and young children, preventing cardiovascular diseases, inhibiting and treating certain cancers, and ensuring the normal functioning of the nervous system.

Milk is not only an essential nutritional product per se, but it is also the basis to produce a wide variety of other dairy products, such as butter, yogurt, cheese etc.

One way to enrich omega-3 PUFAs in milk is to increase the content of these fatty acids in the feed ration of ruminants. However, it has been found that ruminants fed with high concentrations of long chain unsaturated fat in their feed rations can sometimes exhibit one or more of the following results: (1) reduced milk output; (2) decreased fat content in the milk; (3) decreased protein content in the milk; and (4) increased trans-fatty acid content in the milk.

Thus, there remains a need to provide improved methods of producing PUFA-enriched milk and milk derived products with improved and enriched nutritional profile.

### SUMMARY

The present invention relates to a ruminant feed, to methods for making animal feeds that can be introduced to ruminants daily diet, and to uses of such feeds in feeding methods for improving milk quality produced by ruminants. The animal feeds according to the invention may improve various aspects of milk production in the ruminants. For instance, they can lead to increased concentration of polyunsaturated fatty acids of the produced milk and milk derived dairy products.

Based on the disclosure provided herein, those skilled in the art will recognize, or be able to ascertain using no more than routine experimentation, many equivalents to the specific embodiments of the invention described herein. Such equivalents are intended to be encompassed by the following embodiments (E).

Specifically, the present disclosure provides the following aspects, advantageous features and specific numbered embodiments (E), respectively alone or in combination:
E1. A ruminant concentrated feedstock comprising:
   - a mixture containing maize grain, sunflower meal, wheat middling, barley, soyabean meal, calcium carbonate, sodium bicarbonate, minerals and vitamins mix, mycotoxin binder, yeast powder, and
   - about 2 to 4 % w/w of a microalgae concentrate, preferably about 3 % w/w of a microalgae concentrate, wherein said microalgal concentrate is a *Schizochytrium* sp. concentrate or a *Schizochytrium* sp. and *Nannochloropsis gaditana* concentrate.
E2. The ruminant concentrated feed stock of E1, wherein said microalgae concentrate comprises 70 % w/w *Schizochytrium* sp. and 30% w/w *Nannochloropsis gaditana* concentrate,
E3. The ruminant feed stock of E1, wherein said microalgae concentrate comprises 100 % w/w *Schizochytrium* sp concentrate.
E4. The ruminant concentrated feed stock of any one of E1 to E3, wherein said feed stock is a compound feed, a complete feed, a concentrate feed, a supplementary compound feed, a supplement or a booster.
E5. A method of improving milk production of a ruminant, comprising:
   - providing a ruminant concentrated feed stock of anyone of E1 to E4 along with a forage feed to said ruminant for ingestion; and
   - collecting milk from said ruminant after the ruminant has ingested the ruminant feed, and wherein the concentration of docosahexaenoic acid and/or eicosapentaenoic acid and/or docosapentaenoic acid in said milk is increased compared to the concentration of docosahexaenoic acid and/or eicosapentaenoic acid and/or docosapentaenoic acid contained in milk produced by a ruminant fed by a concentrated feedstock which does not comprise a microalgae concentrate.
E6. The method of E5,
   wherein said forage comprises hay, preferably alfalfa hay at about 45 to 50 % w/w, preferably 48 % w/w, of the total daily feed. and straw, preferably wheat straw, at about 3 to 6 % w/w of the total daily feed, preferably 4 % w/w of the total daily feed, and
   wherein said concentrated feed stock comprises about 45 to 50 % w/w of the total daily feed, preferably 48 % w/w of the total daily feed and wherein said concentrated feed stock comprises 1.5% w/w of a microalgae concentrate, preferably a *Schizochytrium* sp concentrate.
E7. The method of E5
   wherein said concentrated feed stock comprises 1.5% w/w of a microalgae concentrate, preferably a *Schizochytrium* sp and *Nannochloropsis gaditana* concentrate, more preferably a 70% w/w *Schizochytrium* sp and 30% ww/ *Nannochloropsis gaditana* concentrate.
E8. The method of E6 or E7,
   wherein said concentrated feed stock comprises 1.5% w/w of a microalgae concentrate, preferably a *Schizochytrium* sp concentrate or a 70% w/w *Schizochytrium* sp and 30% w/ *Nannochloropsis gaditana* concentrate,
   and 98.5 %w/w maize grain, sunflower meal, wheat middling, barley, soyabean meal, calcium carbonate, sodium bicarbonate, minerals and vitamins mix, mycotoxin binder, yeast powder, soyabean oil and palm oil.
E9. The method of E8,
   wherein said concentrated feed stock comprises 1.5% w/w of a microalgae concentrate, preferably a *Schizochytrium* sp concentrate or a 70% w/w *Schizochytrium* sp and 30% w/ *Nannochloropsis gaditana* concentrate,
   and maize grain 46,95% w/w, sunflower meal 8% w/w, wheat middling 7% w/w, barley 10% w/w, soyabean meal 18.5% w/w, premix of minerals and vitamins 2.5% w/w, calcium carbonate 1.4% w/w, sodium bicarbonate 0.3% w/w, mycotoxin binder 0.1% w/w, yeast powder 2.5% w/w, soyabean oil 0.25% w/w, palm oil 1% w/w
E10. A method of preparing a ruminant feed mixture of any one of E1 to E4, comprising:
   - preparing a first mixture containing maize grain, sunflower meal, wheat middling, barley, soyabean meal, calcium carbonate, sodium bicarbonate, minerals and vitamins mix, mycotoxin binder, and yeast powder
   - adding to said first mixture a microalgae concentrate.
E11. The method of E10, wherein said method of preparing a ruminant feed mixture comprises:
   - preparing a first mixture containing maize grain, sunflower meal, wheat middling, barley, soyabean meal, calcium carbonate, sodium bicarbonate, minerals and vitamins mix, mycotoxin binder, and yeast powder
   - adding to said first mixture a microalgae concentrate, wherein said microalgae concentrate has a concentration of about 2-4 % w/w, preferably 3 % w/w.
E12. The method of E10 or E11, wherein said method of preparing a ruminant concentrated feed stock comprises:
   - preparing a first mixture containing maize grain, sunflower meal, wheat middling, barley, soyabean meal, calcium carbonate, sodium bicarbonate, minerals and vitamins mix, mycotoxin binder, and yeast powder
   - adding to said first mixture a microalgae concentrate, wherein said microalgae concentrate is a *Schizochytrium* sp.concentrate or a *Schizochytrium sp.* and *Nannochloropsis gaditana* concentrate
E13. The method of any one of E10 to E12, wherein said method of preparing a ruminant concentrated feedstock comprises:
   - preparing a first mixture containing maize grain, sunflower meal, wheat middling, barley, soyabean meal, calcium carbonate, sodium bicarbonate, minerals and vitamins mix, mycotoxin binder, and yeast powder
   - adding to said first mixture a microalgae concentrate, wherein said microalgae concentrate is a Schizochytrium sp. concentrate, preferably 3% w/w Schizochytrium sp. concentrate.
E14. The method of any one of E10 to E13, wherein said method of preparing a ruminant concentrated feedstock comprises:
   - preparing a first mixture containing maize grain, sunflower meal, wheat middling, barley, soyabean meal, calcium carbonate, sodium bicarbonate, minerals and vitamins mix, mycotoxin binder, and yeast powder
   - adding to said first mixture a microalgae concentrate, wherein said microalgae concentrate is a *Schizochytrium sp.* and *Nannochloropsis gaditana* concentrate, and wherein said concentrate comprises 70 % w/w *Schizochytrium sp.* and 30% w/w *Nannochloropsis gaditana* concentrate.
E15. Use of a ruminant concentrated feed stock of any one of E1 to E4 for improving milk production of a ruminant according to any one of E5 to E9.
E16. A milk-derived product, preferably yogurt, produced by milk directly obtainable by the method of any one of E5 to E9.

### DETAILED DESCRIPTION OF THE INVENTION

As disclosed and exemplified herein, the present disclosure provides a ruminant feed, methods for making animal feeds that can be introduced to ruminants' daily diet, and to uses of such feeds in feeding methods for improving milk quality produced by ruminants. The animal feeds according to the invention may improve various aspects of milk production in the ruminants. For instance, they can lead to increased concentration of polyunsaturated fatty acids of the produced milk and related dairy products.

Ruminant products such as milk, cheese, yogurt and beef have been criticized for their low content of PUFA and high content of SFA (Kliem and Shingfield, 2016; Rodriguez-Herrera et al., 2017). Despite this, one of the most effective means of increasing the content PUFA in the human diet is via dairy products, particularly cheese (Givens and Gibbs, 2006). In the majority of studies that have attempted to improve the health attributes of milk and cheese, the main dietary source of PUFA has been fish oil (Chilliard et al., 2001). However, due to the high commercial demand, and because of the competition from other sectors such as the pharmaceutical trade, fish-based commodities are, actually, very expensive. Moreover, aquaculture accounts for a large portion of the global demand for fish oil, leading to the paradox that fish oil is used for fish breeding. Aside from being uneconomic, fish oil production is also considered detrimental for the environment, since its increasing demand leads to a fast decline of natural fish stocks.

One of the primary producer of PUFAs at the base of the food chain are microalgae (Givens and Gibbs, 2006). Microalgae are a rich source of w-3 PUFAs such as C20:5 (eicosapentaenoic acid, EPA) and C22:6 (docosahexaenoic acid, DHA) which are not synthesized by land plants. Additionally, microalgae-based technology exhibits several advantages, which overcome numerous constraints related to the cultivation of other organisms and/or natural sources. They do not require arable land and, thus, do not compete with agricultural crops for space and exhibit growth rates higher than those observed in terrestrial plants. Besides, microalgal growth could be considered an environmentally safe process, not requiring herbicides and pesticides for maintenance. Their growth can be directly related to carbon dioxide fixation and can also contribute to the reduction of other greenhouse gases in the atmosphere such as nitrogen and sulphur oxides. Moreover, microalgal biomass does not require cost- and time-consuming pre-treatments for the extraction of biomolecules while it is also possible to minimise or avoid the use of solvents.

The inventors of the present disclosure produced a novel feed ration and feed mixture for ruminants which comprises microalgae biomass, and designed a method for feeding ruminants which led to production of milk having an improved nutritional profile, such as increased concentrations of health beneficial polyunsaturated fatty acids. Milk which is produced by animals following a diet comprising the feed stock of the invention is particularly suitably for the preparation of dairy products, preferably yogurt, showing an increased concentration of PUFAs.

In one aspect the present disclosure relates to ruminant concentrated feed stock comprising microalgae. In one embodiment said ruminant concentrated feed stock comprises solid microalgae.

In one embodiment said ruminant concentrated feed stock comprises a microalgae concentrate.

In one embodiment said ruminant concentrated feed stock comprises a powdered microalgae concentrate. In one embodiment said ruminant concentrated feed stock comprises a freeze dried powdered microalgae concentrate.

In one embodiment said ruminant feed stock comprises about 2 to 4 % w/w of said microalgae concentrate. In one embodiment said ruminant feed stock comprises about 3 % w/w of said microalgae concentrate.

In one embodiment said ruminant feed stock comprises a microalgae concentrate, wherein said concentrate is a *Schizochytrium* sp. or *Nannochloropsis gaditana* concentrate.

In one embodiment said ruminant feed stock comprises a microalgae concentrate, wherein said concentrate is a *Schizochytrium* sp. concentrate.

In one embodiment said ruminant feed stock comprises a microalgae concentrate, wherein said concentrate is a *Nannochloropsis gaditana* concentrate.

In one embodiment said ruminant feed stock comprises a microalgae concentrate, wherein said concentrate is a *Schizochytrium sp.* and *Nannochloropsis gaditana* concentrate.

In one embodiment said ruminant feed stock comprises a microalgae concentrate, wherein said concentrate comprises 100 % w/w *Schizochytrium* sp.

In one embodiment said ruminant feed stock comprises a microalgae concentrate, wherein said concentrate comprises 70 % w/w *Schizochytrium* sp. and 30% w/w *Nannochloropsis gaditana* concentrate. In one embodiment said ruminant feed stock comprises a microalgae concentrate, wherein said concentrate comprises 60 % w/w *Schizochytrium* sp. and 40% w/w *Nannochloropsis gaditana* concentrate.

In one embodiment said ruminant concentrated feed stock comprises
- a mixture containing maize grain, sunflower meal, wheat middling, barley, soyabean meal, calcium carbonate, sodium bicarbonate, minerals and vitamins mix, mycotoxin binder, yeast powder, and
- about 2 to 4 % w/w of a microalgae concentrate

In one embodiment said ruminant concentrated feed stock comprises
- a mixture containing maize grain, sunflower meal, wheat middling, barley, soyabean meal, calcium carbonate, sodium bicarbonate, minerals and vitamins mix, mycotoxin binder, yeast powder, and
- about 3 % w/w of a microalgae concentrate.

In one embodiment said ruminant concentrated feedstock comprises
- a mixture containing maize grain, sunflower meal, wheat middling, barley, soyabean meal, calcium carbonate, sodium bicarbonate, minerals and vitamins mix, mycotoxin binder, yeast powder, and
- about 2 to 4 % w/w of a microalgae concentrate,
wherein said microalgal concentrate is a *Schizochytrium* sp. concentrate.

In one embodiment said ruminant concentrated feedstock comprises
- a mixture containing maize grain, sunflower meal, wheat middling, barley, soyabean meal, calcium carbonate, sodium bicarbonate, minerals and vitamins mix, mycotoxin binder, yeast powder, and
- about 3 % w/w of a microalgae concentrate,
wherein said microalgal concentrate is a *Schizochytrium* sp. concentrate.

In one embodiment said ruminant concentrated feedstock comprises
- a mixture containing maize grain, sunflower meal, wheat middling, barley, soyabean meal, calcium carbonate, sodium bicarbonate, minerals and vitamins mix, mycotoxin binder, yeast powder, and
- about 2 to 4 % w/w of a microalgae concentrate,
wherein said microalgal concentrate is a *Schizochytrium* sp. and *Nannochloropsis gaditana* concentrate.

In one embodiment said ruminant concentrated feed stock comprises
- a mixture containing maize grain, sunflower meal, wheat middling, barley, soyabean meal, calcium carbonate, sodium bicarbonate, minerals and vitamins mix, mycotoxin binder, yeast powder, and
- about 3 % w/w of a microalgae concentrate,
wherein said microalgal concentrate is a *Schizochytrium* sp. and *Nannochloropsis gaditana* concentrate.

In one embodiment said ruminant concentrated feedstock comprises
- a mixture containing maize grain, sunflower meal, wheat middling, barley, soyabean meal, calcium carbonate, sodium bicarbonate, minerals and vitamins mix, mycotoxin binder, yeast powder, and
- about 2 to 4 % w/w of a microalgae concentrate,
wherein said microalgal concentrate is a 70% w/w *Schizochytrium* sp. and 30% w/w *Nannochloropsis gaditana* concentrate.

In one embodiment said ruminant concentrated feed stock comprises
- a mixture containing maize grain, sunflower meal, wheat middling, barley, soyabean meal, calcium carbonate, sodium bicarbonate, minerals and vitamins mix, mycotoxin binder, yeast powder, and
- about 3 % w/w of a microalgae concentrate,
wherein said microalgal concentrate is a 70 % w/w *Schizochytrium* sp. and *Nannochloropsis gaditana* 30% w/w concentrate.

In one embodiment said ruminant concentrated feedstock comprises
- a mixture containing maize grain 46.7% w/w, sunflower meal 8% w/w, wheat middling 7% w/w, barley 10% w/w, soyabean meal 18.5% w/w, calcium carbonate 1.4 % w/w, sodium bicarbonate 0.3 % w/w, minerals and vitamins mix 2.5% w/w, mycotoxin binder 0.1% w/w, yeast powder 2.5 % w/w, and
- 3 % w/w of a microalgae concentrate,
wherein said microalgal concentrate is a *Schizochytrium* sp. concentrate.

In one embodiment said ruminant concentrated feedstock comprises
- a mixture containing maize grain 46.7% w/w, sunflower meal 8% w/w, wheat middling 7% w/w, barley 10% w/w, soyabean meal 18.5% w/w, calcium carbonate 1.4 % w/w, sodium bicarbonate 0.3 % w/w, minerals and vitamins mix 2.5% w/w, mycotoxin binder 0.1% w/w, yeast powder 2.5 % w/w, and
- 3 % w/w of a microalgae concentrate,
wherein said microalgal concentrate is a 70 % w/w *Schizochytrium* sp. and *Nannochloropsis gaditana* 30% w/w concentrate.

In one embodiment said ruminant concentrated feedstock comprises
- a mixture containing maize grain 45.7% w/w, sunflower meal 8% w/w, wheat middling 7% w/w, barley 10% w/w, soyabean meal 18.5% w/w, calcium carbonate 1.4 % w/w, sodium bicarbonate 0.3 % w/w, minerals and vitamins mix 2.5% w/w, mycotoxin binder 0.1% w/w, yeast powder 2.5 % w/w, and - 4 % w/w of a microalgae concentrate,
wherein said microalgal concentrate is a 70 % w/w *Schizochytrium* sp. and *Nannochloropsis gaditana* 30% w/w concentrate.

In one embodiment said ruminant feed stock is a compound feed, a complete feed, a concentrate feed, a supplementary compound feed, a supplement or a booster.

In another aspect the present disclosure relates to a method of preparing a ruminant concentrated feed stock, comprising:
- preparing a first mixture containing maize grain, sunflower meal, wheat middling, barley, soyabean meal, calcium carbonate, sodium bicarbonate, minerals and vitamins mix, mycotoxin binder, yeast powder,
- adding to said first mixture microalgae.

In one embodiment said method of preparing a ruminant concentrated feed stock comprises:
- preparing a first mixture containing maize grain, sunflower meal, wheat middling, barley, soyabean meal, calcium carbonate, sodium bicarbonate, minerals and vitamins mix, mycotoxin binder, yeast powder,
- adding to said first mixture microalgae, wherein said microalgae are a microalgae concentrate preferably a powdered microalgae concentrate.

In one embodiment said method of preparing a ruminant concentrated feed stock comprises:
- preparing a first mixture containing maize grain, sunflower meal, wheat middling, barley, soyabean meal, calcium carbonate, sodium bicarbonate, minerals and vitamins mix, mycotoxin binder, yeast powder,
- adding to said first mixture microalgae, wherein said microalgae are a freeze dried powdered microalgae concentrate

In one embodiment said method of preparing a ruminant concentrated feed mixture comprises:
- preparing a first mixture containing maize grain, sunflower meal, wheat middling, barley, soyabean meal, calcium carbonate, sodium bicarbonate, minerals and vitamins mix, mycotoxin binder, yeast powder,
- adding to said first mixture microalgae, wherein said microalgae are in a concentration of about 2-4 % w/w.

In one embodiment said method of preparing a ruminant concentrated feed stock comprises:
- preparing a first mixture containing maize grain, sunflower meal, wheat middling, barley, soyabean meal, calcium carbonate, sodium bicarbonate, minerals and vitamins mix, mycotoxin binder, yeast powder,
- adding to said first mixture microalgae, wherein said microalgae are in a concentration of about 2 % w/w. In one embodiment said method of preparing a ruminant concentrated feed stock comprises:
- preparing a first mixture containing maize grain, sunflower meal, wheat middling, barley, soyabean meal, calcium carbonate, sodium bicarbonate, minerals and vitamins mix, mycotoxin binder, yeast powder,
- adding to said first mixture microalgae, wherein said microalgae are in a concentration of about 3 % w/w. In one embodiment said method of preparing a ruminant concentrated feed stock comprises:
- preparing a first mixture containing maize grain, sunflower meal, wheat middling, barley, soyabean meal, calcium carbonate, sodium bicarbonate, minerals and vitamins mix, mycotoxin binder, yeast powder,
- adding to said first mixture microalgae, wherein said microalgae are in a concentration of about 4 % w/w.

In one embodiment said method of preparing a ruminant concentrated feed stock comprises:
- preparing a first mixture containing maize grain, sunflower meal, wheat middling, barley, soyabean meal, calcium carbonate, sodium bicarbonate, minerals and vitamins mix, mycotoxin binder, yeast powder
- adding to said first mixture microalgae, wherein said microalgae are a Schizochytrium sp. or Nannochloropsis gaditana concentrate

In one embodiment said method of preparing a ruminant concentrated feed stock comprises:
- preparing a first mixture containing maize grain, sunflower meal, wheat middling, barley, soyabean meal, calcium carbonate, sodium bicarbonate, minerals and vitamins mix, mycotoxin binder, yeast powder
- adding to said first mixture microalgae, wherein said microalgae are a *Schizochytrium* sp. concentrate In one embodiment said method of preparing a ruminant concentrated feed stock comprises:
- preparing a first mixture containing maize grain, sunflower meal, wheat middling, barley, soyabean meal, calcium carbonate, sodium bicarbonate, minerals and vitamins mix, mycotoxin binder, yeast powder
- adding to said first mixture microalgae, wherein said microalgae are a *Schizochytrium* sp or *Nannochloropsis gaditana* concentrate.

In one embodiment said method of preparing a ruminant concentrated feed stock comprises:
- preparing a first mixture containing maize grain, sunflower meal, wheat middling, barley, soyabean meal, calcium carbonate, sodium bicarbonate, minerals and vitamins mix, mycotoxin binder, yeast powder
- adding to said first mixture microalgae, wherein said microalgae are a *Schizochytrium* sp. and *Nannochloropsis gaditana* concentrate.

In one embodiment said method of preparing a ruminant concentrated feed stock comprises:
- preparing a first mixture containing maize grain, sunflower meal, wheat middling, barley, soyabean meal, calcium carbonate, sodium bicarbonate, minerals and vitamins mix, mycotoxin binder, yeast powder
- adding to said first mixture microalgae, wherein said microalgae are a *Schizochytrium* sp. and *Nannochloropsis gaditana* concentrate, and wherein said concentrate comprises 70 % w/w *Schizochytrium* sp. and 30% w/w *Nannochloropsis gaditana* concentrate.

In one embodiment said method of preparing a ruminant concentrated feed stock comprises:
- preparing a first mixture containing maize grain, sunflower meal, wheat middling, barley, soyabean meal, calcium carbonate, sodium bicarbonate, minerals and vitamins mix, mycotoxin binder, yeast powder
- adding to said first mixture microalgae, wherein said microalgae are a *Schizochytrium* sp. and *Nannochloropsis gaditana* concentrate, and wherein said concentrate comprises 60 % w/w *Schizochytrium* sp. and 40% w/w *Nannochloropsis gaditana* concentrate.

In one embodiment said method of preparing a ruminant concentrated feed stock comprises:
- preparing a first mixture containing maize grain, sunflower meal, wheat middling, barley, soyabean meal, calcium carbonate, sodium bicarbonate, minerals and vitamins mix, mycotoxin binder, yeast powder
- adding to said first mixture microalgae, wherein said microalga a *Schizochytrium* sp. concentrate, and wherein said concentrate comprises 100 % w/w *Schizochytrium* sp. concentrate.

In one embodiment said method of preparing a ruminant concentrated feed stock comprises:
- preparing a first mixture containing maize grain 46.7% w/w, sunflower meal 8% w/w, wheat middling 7% w/w, barley 10% w/w, soyabean meal 18.5% w/w, calcium carbonate 1.4 % w/w, sodium bicarbonate 0.3 % w/w, minerals and vitamins mix 2.5% w/w, mycotoxin binder 0.1% w/w, yeast powder 2.5 % w/w,
- adding to said first mixture 3 % w/w microalgae, wherein said microalgae is a *Schizochytrium* sp. concentrate, and wherein said concentrate comprises 100 % w/w *Schizochytrium* sp..

In one embodiment said method of preparing a ruminant concentrated feed stock comprises:
- preparing a first mixture containing maize grain 46.7% w/w, sunflower meal 8% w/w, wheat middling 7% w/w, barley 10% w/w, soyabean meal 18.5% w/w, calcium carbonate 1.4 % w/w, sodium bicarbonate 0.3 % w/w, minerals and vitamins mix 2.5% w/w, mycotoxin binder 0.1% w/w, yeast powder 2.5 % w/w,
- adding to said first mixture 3% w/w microalgae, wherein said microalgae is a *Schizochytrium* sp.and *Nannochloropsis gaditana* concentrate, and wherein said concentrate comprises 70 % w/w *Schizochytrium* sp. and 30% w/w *Nannochloropsis gaditana.*

In one embodiment said method of preparing a ruminant concentrated feed stock comprises:
- preparing a first mixture containing maize grain 45.7% w/w, sunflower meal 8% w/w, wheat middling 7% w/w, barley 10% w/w, soyabean meal 18.5% w/w, calcium carbonate 1.4 % w/w, sodium bicarbonate 0.3 % w/w, minerals and vitamins mix 2.5% w/w, mycotoxin binder 0.1% w/w, yeast powder 2.5 % w/w,
- adding to said first mixture 4% w/w microalgae, wherein said microalgae is a *Schizochytrium* sp.and *Nannochloropsis gaditana* concentrate, and wherein said concentrate comprises 70 % w/w *Schizochytrium* sp. and 30% w/w *Nannochloropsis gaditana.*

In another aspect the present disclosure relates to a ruminant concentrated feed stock obtained by or directly obtainable by method of the invention,

In an even further aspect, the present disclosure relates to a method of improving milk production of a ruminant, comprising:
- providing a ruminant concentrated feed stock of anyone of the invention along with a forage feed to said ruminant for ingestion; and
- collecting milk from said ruminant after the ruminant has ingested the ruminant feed, and wherein the concentration of docosahexaenoic acid and/or eicosapentaenoic acid and/or docosapentaenoic acid in said milk is increased compared to the concentration of docosahexaenoic acid and/or eicosapentaenoic acid and/ or dcosapentaenoic acid contained in milk produced by a ruminant fed by a concentrated feedstock which does not comprise a microalgae concentrate.

In one embodiment of said method of improving milk production, said forage comprises hay, preferably alfalfa hay, at about 45 to 50 % w/w, preferably 48 % w/w, of the total daily feed, and straw, preferably wheat straw, at about 3 to 6 % w/w of the total daily feed, preferably 4 % w/w of the total daily feed, and wherein said concentrated feed stock comprises about 45 to 50 % w/w of the total daily feed, preferably 48 % w/w of the total daily feed, and wherein said concentrated feed stock comprises 1.5% w/w of a microalgae concentrate.

In one embodiment of said method of improving milk production, said concentrated feed stock comprises 1.5% w/w of a microalgae concentrate,

In one embodiment of said method of improving milk production, said concentrated feed stock comprises 1.5% w/w of a *Schizochytrium* sp and *Nannochloropsis gaditana* concentrate.

In one embodiment of said method of improving milk production, said concentrated feed stock comprises 1.5% w/w of a *Schizochytrium* sp concentrate.

In one embodiment of said method of improving milk production, said concentrated feed stock comprises 1.5% w/w of microalgae concentrate comprising a 70% w/w *Schizochytrium* sp and 30% ww/

### Nannochloropsis gaditana.

In one embodiment of said method of improving milk production, said concentrated feed stock comprises 1.5% w/w of a *Schizochytrium* sp concentrate,
and 98.5 %w/w maize grain, sunflower meal, wheat middling, barley, soyabean meal, calcium carbonate, sodium bicarbonate, minerals and vitamins mix, mycotoxin binder, yeast powder, soyabean oil and palm oil.

In one embodiment of said method of improving milk production, said concentrated feed stock comprises 1.5% w/w of a microalgae concentrate comprising 70% w/w *Schizochytrium* sp and 30% w/

*Nannochloropsis gaditana,*
and 98.5 %w/w maize grain, sunflower meal, wheat middling, barley, soyabean meal, calcium carbonate, sodium bicarbonate, minerals and vitamins mix, mycotoxin binder, yeast powder, soyabean oil and palm oil.

In one embodiment of said method of improving milk production, said concentrated feed stock comprises 1.5% w/w of a *Schizochytrium* sp concentrate,
and maize grain 46,95% w/w, sunflower meal 8% w/w, wheat middling 7% w/w, barley 10% w/w, soyabean meal 18.5% w/w, premix of minerals and vitamins 2.5% w/w, calcium carbonate 1.4% w/w, sodium bicarbonate 0.3% w/w, mycotoxin binder 0.1% w/w, yeast powder 2.5% w/w, soyabean oil 0.25% w/w, palm oil 1% w/w

In one embodiment of said method of improving milk production, said concentrated feed stock comprises 1.5% w/w of a microalgae concentrate comprising a 70% w/w *Schizochytrium* sp and 30% w/ *Nannochloropsis gaditana,*
and maize grain 46,95% w/w, sunflower meal 8% w/w, wheat middling 7% w/w, barley 10% w/w, soyabean meal 18.5% w/w, premix of minerals and vitamins 2.5% w/w, calcium carbonate 1.4% w/w, sodium bicarbonate 0.3% w/w, mycotoxin binder 0.1% w/w, yeast powder 2.5% w/w, soyabean oil 0.25% w/w, palm oil 1% w/w.

In even further aspect the present disclosure relates to a use of a ruminant concentrated feed stock for improving production of milk or milk- derived products, preferably yogurt.

In one more aspect the invention relates to a milk-derived product, preferably yogurt, produced by milk directly obtainable by a method of the disclosure.

### Definitions

In the context of the present disclosure the term "ruminant shall mean goats and sheep.

A "ruminant feed mixture" or a "ruminant feed" or "feed stock" or "feed stuff' comprises compositions suitable for feeding to ruminants, including complete feeds, compound feeds, concentrate feeds, supplementary compound feeds, supplements, boosters or the like. Usually, feedstuffs are combined to produce rations. The two primary factors influencing the selection of feedstuffs and relative proportion of feedstuffs in a ration are nutrient content of a feedstuff and cost of the feedstuff. The nutrient profile of the resultant ration should closely match the nutrient profile of the animal's requirements.

A "compound feed" refers generally to an industrially produced feed mixture of at least two feed materials. Within this disclosure, a "complete feed" refers to a compound feed containing all main nutrients needed for a daily ration, including also all the roughage needed by the ruminant.

By "concentrate feed" or "complementary feed" is referred to a compound feed which has a high content of certain substances but which is sufficient for a daily ration only if used in combination with other feed.

A "supplementary compound feed" or a "supplement" refers to nutritive materials which are added to a basic diet to supplement its deficiencies.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", that is, a singular form, throughout this document does not exclude a plurality.

The term "about" or "approximately" means the mentioned value +/-10%, for example about 10 shall mean 9 to 11.

The term "nutritional profiling" in the context of the current disclosure refers to classifying, ranking or evaluating foods or feed stock according to their nutritional composition for reasons related to preventing disease, promoting health and or having increased concetration of ingredients directly correlated with preventing disease and/or promoting health.

Unless otherwise required by context, singular terms shall include pluralities and plural terms shall include the singular. The use of "or" means "and/or" unless stated otherwise.

### EXAMPLES

### Experimental setup

### Materials

Microalgae belonging mainly to *Nannochloropsis gaditana* with approx. 40% w/w protein and 30% EPA (C20:5n3) % w/w of total fatty acids in lyophilized form (approx. 91% dry matter) were used for the preparation of the ruminant feed stock and were cultivated and obtained by Mikrofykos S. A. Additionally, microalga *Schizochytrium* sp., the main microalagae of the ruminant feed stock (DHAGOLD S17-B with product code 5013801), commercially available, were purchased by DSM Nutritional Products Hellas LTD. All microalgal material was delivered in freeze-dried form.

Testing of the produced ruminant feed stock was performed in female sheep, variety...

### Preparation of ruminant feed stock and feeding protocol of ruminants with microalgae enriched feedstock.

### A. Preliminary experiment

In order to assess the effect of the microalgal enriched feedstock of the invention on milk production and more particularly the effect on PUFA concentration of the produced milk, a feeding protocol was implemented using 60 female sheep, divided in ten groups consisting of 6 individual animals.

The first group was the control group and consumed daily in two equal meals (morning and afternoon) 1.83 kg of alfalfa hay (as forage) and 1.83 kg of a mixture of concentrated feedstock (control feedstock), while the intervention groups 2 to 10 consumed daily ) 1.83 kg of alfalfa hay (as forage) and two different meals of mixtures of concentrated feedstock, namely 0.83 kg of the same mixture of concentrated feedstock used for the control group and 1 kg of a mixture of concentrated feedstock enriched with a microalgal concentrate. The composition of all meals for the control group and the intervention groups is shown in Table 1 below. Therefore, the ratio of coarse to concentrated during the preliminary experimentation was 50:50.

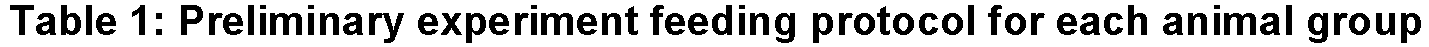

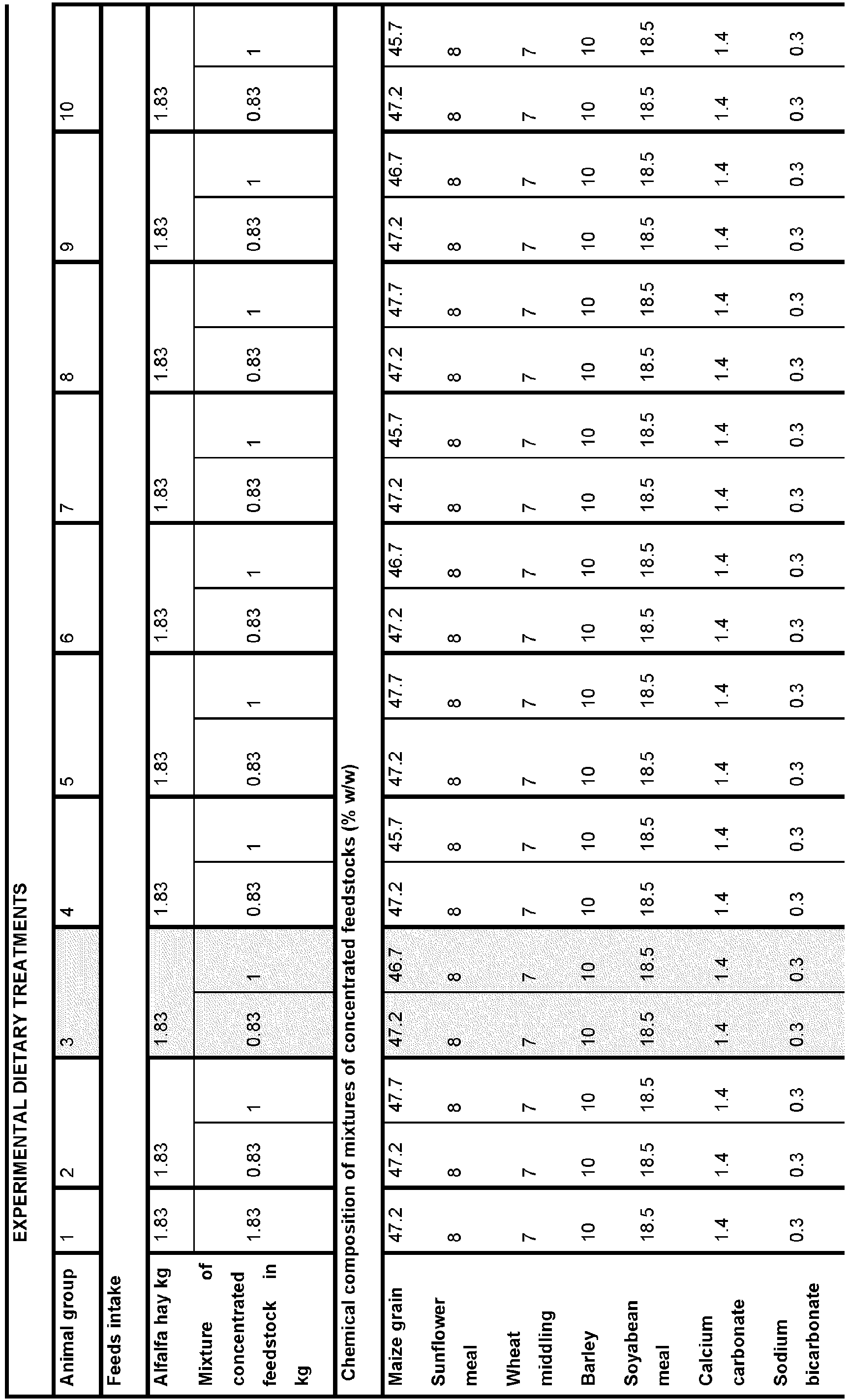

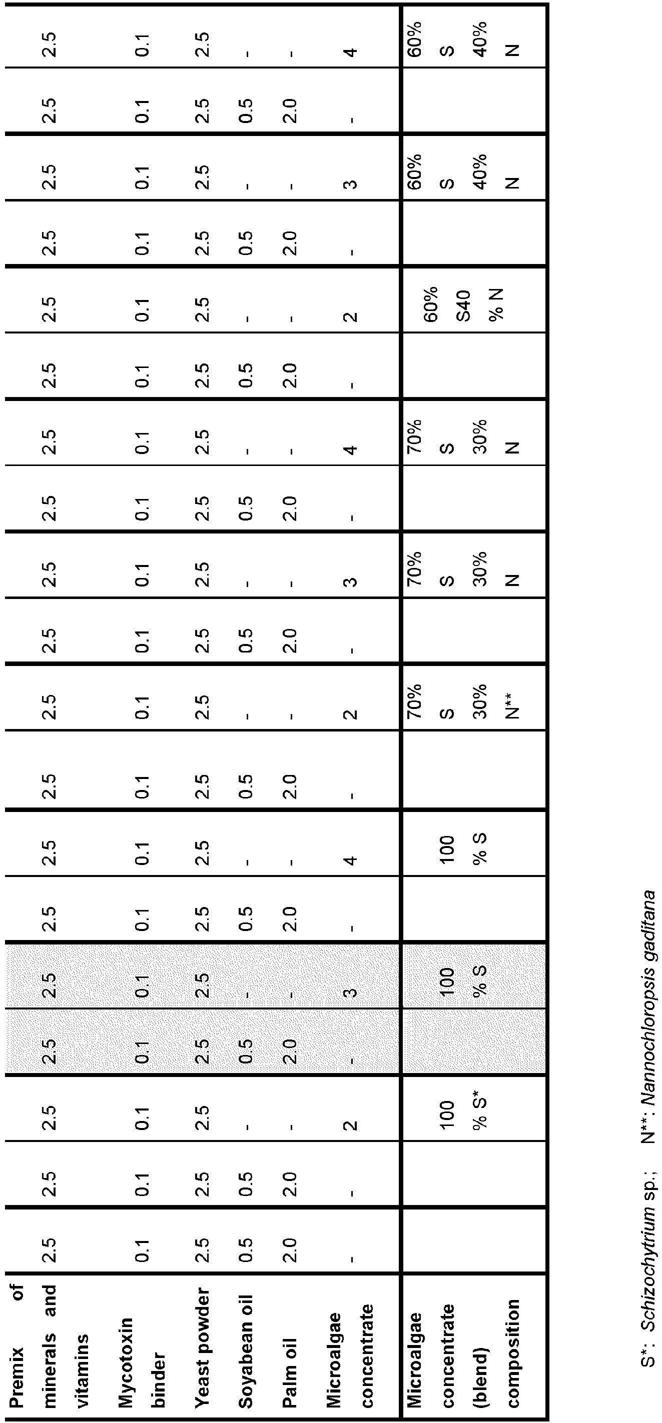

### B. Validation experiment

During the second phase of the experiments, the feeding intervention comprising incorporation of 3% w/w of microalgae Schizochytrium sp. only, herein after dc30, in the daily feeding protocol (namely intervention performed on animal group 3) was investigated again together with groups 6 -hereinafter MB30-(namely 3% w/w microalgal concentrate containing 70% w/w and *Schizochytrium* sp and 30% w/w *Nannochloropsis gaditana*), and 7-hereinafter MB40 (namely 4% w/w microalgal concentrate containing 70% w/w and *Schizochytrium* sp and 30% w/w *Nannochloropsis gaditana*), along with the control feeding intervention (namely the feeding applied to control group 1), in order to confirm the initial findings and in particular to achieve the main goal of enriching the final products with >40mg/ 100g EPA-DHA fatty acids. These feeding intervention groups were selected both according to the overall milk productivity and the chemical composition of the produced milk.

For this purpose, 32 sheep were used, at the beginning of their lactation period, and were divided into 4 equal groups (n=8) based on their average daily milk production and fed as a group (feeding intervention groups).

During the validation experiment, the control group consumed daily two equal meals (morning and evening) consisting of 2kg per animal alfalfa hay (as forage), 0.15 kg per animal wheat straw (as forage) and a mixture of concentrated feedstock without migroalgae, while the two tested groups consumed daily 2 kg per animal alfalfa hay (as forage), 0.15 kg per animal wheat straw (as forage) and two different mixtures of concentrated feedstock (1 kg per animal of each of the two mixtures), as shown in more detail on Table 2.

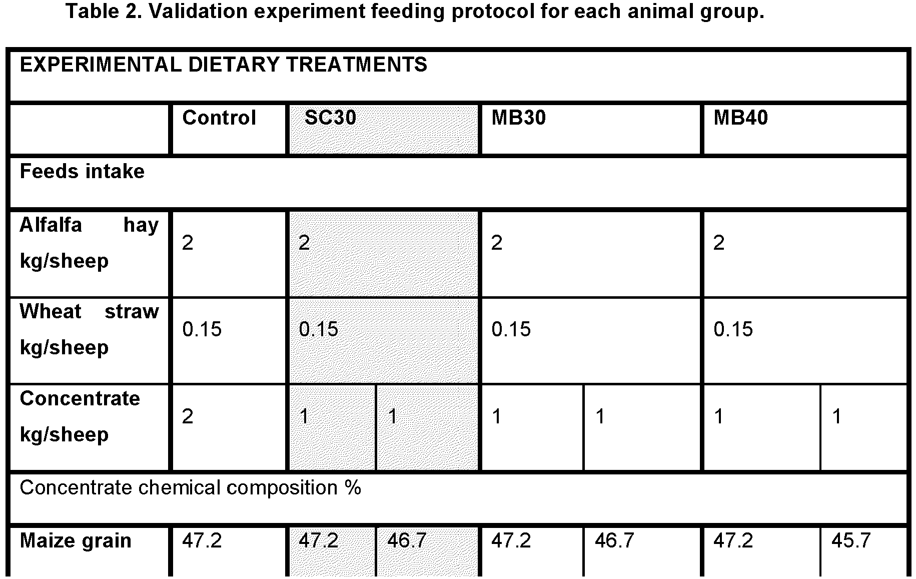

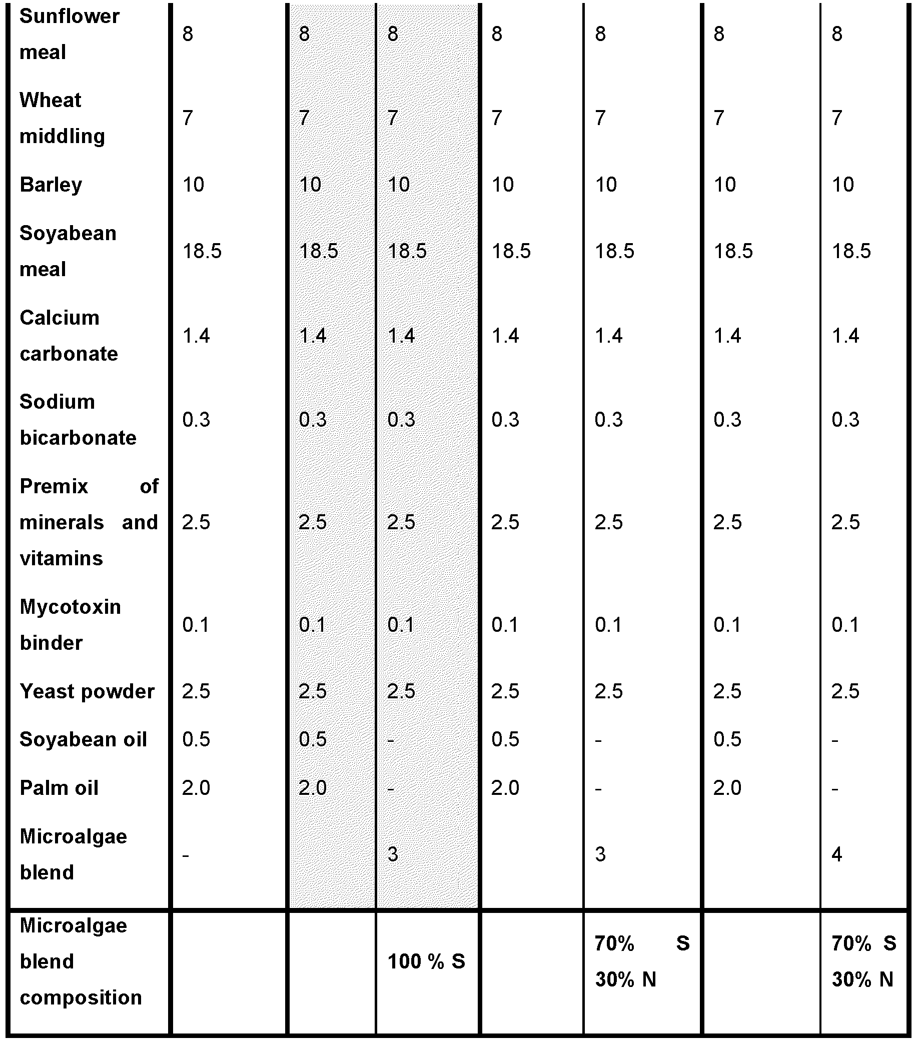

Overall, the dietary or feeding protocol comprising both the forage and the concentrated feed stock shall be given as a total amount of 6 % of the body weight (e.g. sheep or goat in kg) diet (per animal, daily) (e.g. sheep with 70kg body weight should consume, daily, approximately 4.2 kg diet as total feed)

A preferred, effective total feed mixture for daily consumption by an animal according to the invention shall include
a. Forages being
   - about 45 to 50 % w/w of the total diet, preferably 48 % w/w of the total diet hay (non-chopped or 2.5-7.5 cm chopped) with average crude protein content in the range of 13 to 20% and NDF (neutral detergent fiber) in the range of 40 to 70% as fed.
   - about 3 to 6 % w/w of the total diet, preferably 4 % w/w of the total diet straw (non-chopped or 2.5-7.5 cm chopped).

Feedstock Concentrate enriched with microalgae:
- about 45 to 50 % w/w of the total diet, preferably 48 % w/w of the total diet a concentrate mixture consisted of maize grain (46,95%), sunflower meal (8%), wheat middling (7%), barley (10%), soyabean meal (18.5%), premix of minerals and vitamins (2.5%), calcium carbonate (1.4%), sodium bicarbonate (0.3%), mycotoxin binder (0.1%), yeast powder (2.5%), soyabean oil (0.25%), palm oil (1%) and a microalgae concentrate (1.5% w/w, comprising a Schizochytrium sp. concentrate alone or a combination of 70% *Schizochytrium* sp. and 30% *Nannochloropsis gaditana*)

The Schizochytrium sp. concentrate shall contain at least 50% w.w fat or ether extract of which the minimum concentration of DHA and DPA should be 18% w/w and 5% w/w (of total fatty acids), respectively.
- The other autotrophic microalgae, *Nannochloropsis gaditana*, which alternatively can be included in the microalgae concentrate (if needed-optional addition).

Throughout the experimental period, milk samples were taken in order to analyze the chemical composition and fatty acid profile of the milk, as well as its oxidative status.

More particularly the sheep were milked twice a day at 07:30 and 19:30 by a portable milking machine. Individual milk samples were collected into plastic tubes at 18, 36, 54, 72 and 90 days of the main experimental period for the determination of chemical composition, fatty acid profile, total antioxidant content and antioxidant enzymes activities after pooling the yield from the evening and the morning milking. The milk samples were stored at -80 °C, before the analysis of the fatty acid profile and enzyme activity.

In addition, yogurt samples were prepared from the produced milk following a standard yogurt production method for the purpose of conducting taste tests.

Furthermore, during the same feeding period, the health and oxidative status of the tested animals were checked in blood samples. The blood samples were collected from the jugular vein and put into 17 Units/mL heparin-containing tubes at 18, 36, 54, 72 and 90 days of the main experimental period for the determination of the total antioxidant content and antioxidant enzymes activities. After the collection, the blood samples were subsequently centrifuged at 2700× g for 10 min. After, the blood samples were stored at -80 °C, prior to enzyme activities analysis.

Finally, determination of sheep methane emissions was performed using a gas accumulation cage, in order to assess the effect of the microalgae enriched feedstock diet to the environment.

### RESULTS

### Effect of microalgal enriched feed stock in milk production and milk products

This feeding strategy followed during the validation experiment did not substantially affect the productivity of the animals as well as the chemical composition of the milk (as shown in Table 3 e.g. for the control and the SC30 animal groups, the feeding strategy effect was within the statistical error). This result is very important towards the aim of preparing milk products with improved nutritional profile does not affect the productivity and quality of the milk, a fact on which the income of the producer highly depends on.

The milk samples were analyzed for fat, protein, lactose, total solids and no fat solid by IR (infra-red) spectrometry (MilkoScan 120; Foss Electric, Hillerød, Denmark) after proper calibration according to Gerber (British Standards Institution, 1955) and Kjeldahl (International Dairy Federation, 1993).

**Table 3: Average daily milk production of sheep (g/day/animal)-Milk chemical composition (g/kg milk)**

| **Milk production features** | **Tested group** | | **P value** |
|---|---|---|---|
| | **Control** | **SC30** | |
| Milk production (g) | 2284 | 2202 | 0.859 |
| Milk production corrected for fat content (6%) (g) | 2470 | 2198 | 0.285 |
| Milk production corrected for energy (g) | 2198 | 2017 | 0.394 |
| Fat (%) | 6.77 | 6.07 | 0.083 |
| Yield in fat (g) | 151.7 | 131.7 | 0.157 |
| Protein (%) | 6.27 | 6.32 | 0.399 |
| Yield in protein (g) | 139.9 | 137.1 | 0.741 |
| Lactose (%) | 4.54 | 4.62 | 0.700 |
| Total solids (%) | 18.20 | 17.58 | 0.149 |
| No fat solids (%) | 11.63 | 11.71 | 0.417 |

Moreover, the fatty acid profile in milk (and produced yogurt) was measured as Fatty Acids Methyl Esters (FAME) as described by Correddu et al. (2016). The FAME were analysed using a Turbo 3400 CX gas chromatograph (Varian Inc., Palo Alto, CA), equipped with a flame-ionization detector (FID), an automatic injector 8200 CX (Varian Inc.), and a capillary column (CP-select CB for FAME; 100 m × 0.32 mm i.d., 0.25-µm film thickness, Varian Inc.).

As it can be seen on Table 4 below, the fatty acid profile of the milk produced from the addition of 30g of microalgae - Schizochytrium sp. significantly increased EPA, DPA and DHA fatty acids, (which are also referred to in Article 13(1) of EC Regulation on nutrition and health claims of the European Food Safety Authority). At the same time, short-chain fatty acids (SCFA), which are responsible for the traditional taste of sheep's milk, were not negatively affected.

**Table 4: Milk fatty acids percentage (% w/w) , the grouped (SCFA, MCFA, LCFA, PUFA, MUFA, UNFA, SFA) fatty acids, the ratio of saturated to unsaturated fatty acids (SFA/UNFA), some indicators (Al, TI, HPI) related to consumer health, as well as the percentages of EPA, DPA and DHA in milk originating from Control group and feeding intervention Group 3.**

| | **Tested group** | | **P value** |
|---|---|---|---|
| | **Control** | **Group SC30** | |
| C4:0 | 4.31 | 4.38 | 0.920 |
| C6:0 | 2.67^{A} | 3.07^{B} | 0.002 |
| C8:0 | 2.26^{A} | 2.78^{A} | <0.001 |
| C10:0 | *8.00^{A}* | 9.15^{B} | 0.020 |
| C12:0 | 5.22 | 5.22 | 0.345 |
| C14:0 | 12.16 | 12.97 | 0.097 |
| C16:0 | 28.03 | 27.38 | 0.009 |
| C18:0 | 7.44^{A} | 5.19^{B} | 0.006 |
| CLAc9t11 | 0.351^{A} | 0.918B | 0.015 |
| EPA | 0.061^{A} | 0.105^{B} | <0.001 |
| DPA n6 | 0.031^{A} | 0.346^{B} | <0.001 |
| DPA n3 | 0.087^{A} | 0.119^{B} | 0.009 |
| DHA | 0.046^{A} | 1.09^{B} | 0.005 |
| SFA | 72.84 | 73.03 | 0.476 |
| SCFA | 17.76^{A} | 19.92^{B} | 0.002 |
| MCFA | 46.66 | 46.94 | 0.047 |
| LCFA | 8.42^{A} | 6.16^{B} | 0.007 |
| Branched chain fatty acids | 1.79 | 1.67 | 0.318 |
| MUFA | 19.60^{A} | 17.38^{B} | 0.005 |
| PUFA | 5.56^{A} | 7.69^{B} | <0.001 |
| UFA | 25.16 | 25.07 | 0.403 |
| SFA/UFA | 2.94 | 2.97 | 0.408 |
| AI | 9.81^{A} | 12.63^{B} | <0.001 |
| TI | 9.51^{A} | 13.75^{B} | <0.001 |
| HPI | 0.294 | 0.273 | 0.169 |

Means with different exponent between dietary interventions (A, B) and differed significantly (p ≤ 0.05).

Additionally, the levels of DHA in yogurt prepared with the milk produced by sheep of group SC30 (feed stock comprising 30g of microalgae - *Schizochytrium* sp) have shown an increase to 68 mg/100 g of milk (see Table 5), i.e. more than 62% of what is required by the EFSA regulation to support the regulation health claims.

**Table 5: Main milk fatty acids percentage (% w/w), some indicators (Al, TI, HPI) related to consumer health, as well as the percentages of EPA, DPA and DHA, in yogurt, originating from Control group and feeding intervention SC30.**

| | **Tested group** | | **P value** |
|---|---|---|---|
| | **Control** | **Group SC30** | |
| C4:0 | 4.47^{a} | 4.28^{b} | <0.001 |
| C6:0 | 2.76^{a} | 3.03^{b} | <0.001 |
| C8:0 | 3.03^{b} | 3.03^{b} | <0.001 |
| C10:0 | 8.20^{a} | 9.16^{b} | <0.001 |
| C12:0 | 5.17^{a} | 5.45^{b} | <0.001 |
| C14:0 | 12.44^{a} | 13.08^{b} | <0.001 |
| C16:0 | 28.35^{a} | 26.93^{b} | <0.001 |
| C18:0 | 7.54^{a} | 5.71^{b} | <0.001 |
| CLAc9t11 | 0.323^{a} | 0.658^{b} | <0.001 |
| EPA | 0.066^{a} | 0.108^{b} | <0.001 |
| DPA* n6 | 0.019^{a} | 0.296^{b} | <0.001 |
| DPA n3 | 0.084^{a} | 0.117^{b} | <0.001 |
| DHA | 0.046^{a} | 1.142^{b} | <0.001 |
| AI (atherogenity index) | 3.47^{ab} | 3.38a | 0.028 |
| TI (thrombogenity index) | 9.91^{a} | 14.29^{b} | <0.001 |
| HPI (health promoting index) | 0.273 | 0.272 | 0.128 |

Means with different exponent (a, b) between dietary intervention differed significantly (p ≤ 0.05). *DPA: Docosapentaenoic acid

The produced yogurt was also checked with regard to the effect of the microalgae enriched feed stock to its taste profile. Such test showed that there were no significant differences in terms of acidity, structure, color, taste and overall acceptance between yogurt produced from milk originating from the Control group sheep and feeding intervention group 3.

It should be noted that addition of microalgae the ruminants'feedstock caused a slight increase in malondialdehyde (MDA) and a decrease in total antioxidant capacity when measured by the ABTS (2,2-azino-bis-3-ethylbenzothiazoline-6-sulphonic acid) method in milk. Nevertheless, after 16 days of storage, this increase in malondialdehyde in the produced yogurt was no longer statistically significant.

The antioxidant capacity and free radical scavenging activity were measured using the Ferric Reducing Antioxidant Power (FRAP) assay and the results were expressed as µM ascorbic acid. Besides, the total antioxidant capacity was monitored with ABTS (2,2'-azino-bis (3 ethylbenzthiazoline-6-sulfonic acid) radical scavenging capacity. Both assays were performed as previously described by Tsiplakou et al. (2017). The measurement of the malondialdehyde (MDA) was performed as described by Nielsen et al. (1997). The protein carbonyls (PC) assay was performed by the method established by Patsoukis et al. (2004). The evaluation of the activity of catalase (CAT), glutathione peroxidase (GSH-Px), superoxide dismutase

(SOD), glutathione reductase (GR) and glutathione transferase (GST) in both milk and blood plasma were performed according to the methods described by Tsiplakou et al. (2017).

**Table 6: Total antioxidant capacity (measured by FRAP, ABTS), activity of antioxidant enzymes (SOD, GPx, CAT) and indicators of protein and lipid oxidation (PC and MDA) in milk produced by Control group (CON) and feeding intervention Group SC30.**

| **Milk sample** | **Tested group** | | **P value** |
|---|---|---|---|
| | **Control** | **Group 3** | |
| FRAP (µM) | 3.66 | 2.19 | 0,172 |
| ABTS (inhibition %) | 33.61^{a} | 29.93^{b} | 0.003 |
| SOD (U/ml) | 102.63 | 94.28 | 0.783 |
| GPx (U/ml) | 0.595^{a} | 0.386^{b} | 0.043 |
| CAT (U/ml) | 5.17 | 4.76 | 0.920 |
| PC (nmol/ml) | 2.90 | 3.14 | 0.062 |
| MDA (µM) | 0.54a | 0.59^{b} | 0.016 |

| | | | |
|---|---|---|---|
| *ferric-reducing antioxidant power (FRAP) assay; SOD: Superoxide dismutase; GPx: Glutathione peroxidase; CAT: catalase; | | | |

**Table 7: Statistical analysis of the antioxidant analyses results in samples of the produced yogurt with regard to the days of refrigerator storage.**

| | **Tested group** | | **P value** |
|---|---|---|---|
| | **Control** | **Group SC30** | |
| 5 days storage | | | |
| FRAP (µM) | 2.84^{a} | 1.48^{b} | 0.001 |
| ABTS (inhibition %) | 29.05 | 27.88 | 0.329 |
| MDA (µM) | 1.85 | 2.11 | 0.769 |

| 10 days storage | | | |
|---|---|---|---|
| FRAP (µM) | 2.21^{a} | 0.96^{b} | 0.001 |
| ABTS (inhibition %) | 29.16 | 26.90 | 0.142 |
| MDA (µM) | 1.99^{a} | 2.59^{b} | 0.042 |

| 16 days storage | | | |
|---|---|---|---|
| FRAP (µM) | 2.44^{a} | 1.36^{b} | 0.001 |
| ABTS (inhibition %) | 28.39 | 29.72 | 0.948 |
| MDA (µM) | 1.92 | 2.36 | 0.596 |

Means with different exponent (a, b) between dietary intervention differed significantly (p ≤ 0.05).

### Effect of microalgal enriched feed stock diet on tested animals health

Assessment of the oxidative status of the animal fed with the microalgae enriched feed mixture of the current invention as measured in blood samples taken throughout the experimental period has shown no increase in blood oxidative stress parameters- see Table 8 below.

**Table 8: Total antioxidant capacity (measured by FRAP, ABTS), antioxidant enzyme activity (SOD, GPx, CAT, GST, GR) and protein and lipid oxidation indicators (PC and MDA) of blood samples taken from Control and feeding intervention group 3 animals accordingly.**

| **blood sample** | **Tested group** | | **P value** |
|---|---|---|---|
| | **Control** | **Group 3** | |
| FRAP (µM) | 0.67 | 0.69 | 0.550 |
| ABTS (inhibition %) | 38.61 | 39.02 | 0.539 |
| SOD (U/ml) | 8.12 | 8.28 | 0.502 |
| GPx (U/ml) | 0.37 | 0.38 | 0.772 |
| CAT (U/ml) | 60.08 | 74.68 | 0.066 |
| GST (U/ml) | 0.049 | 0.047 | 0.150 |
| GR (U/ml) | 0.023 | 0.024 | 0.723 |
| PC (nmol/ml) | 4.41 | 4.49 | 0.080 |
| MDA (µM) | 0.79 | 0.84 | 0.599 |

Means with different exponent (a, b) between dietary intervention differed significantly (p ≤ 0.05). *GST: Glutathione-S-Transferase; GR: glutathione reductase

### Effect of microalgal enriched feed stock diet on gas emissions of tested animals

Greenhouse gas emissions contribute to global warming, consequently leading to extreme climate changes that affect crop productivity and product safety (Leisner, 2020; Wei et al., 2017). Methane (CH₄) emissions from ruminants are one of the most important pollutants in the agricultural sector, contributing to the accumulation of greenhouse gases in the atmosphere. It is estimated that the annual CH4 produced by ruminant farming is about 80 million tons, representing about 28% of CH4 emissions due to anthropogenic activity (Beauchemin et al., 2008). It is noted that CH₄ is exhaled or inhaled primarily through the mouth and gills (nostrils) as a by-product of rumen anaerobic fermentation, whereby microorganisms found in the rumen digest food into absorbable nutrients for the host animal. CH4 is mainly produced by methanogens during the process of anaerobic degradation of plant biomass in the rumen (Hook et al., 2010).

Therefore, it was deemed appropriate to evaluate on a pilot scale the environmental footprint that a livestock farm can have, which incorporates microalgae in its concentrated feed. For this purpose, 6 animals of the feeding intervention Group 3, during the dry season, remained for 20 days in a closed chamber (respiration chamber) of 37m² (95m³), with continuous ventilation, in the experimental facilities of the Agricultural University of Athens. The animals were group-fed twice daily (at 09.00 and 17.00) with 1.8 kg of concentrate feed (CF) and 2.7 kg of alfalfa hay (CF), i.e. in total they received 3.6 kg of CF and 5.4 kg of CF per day ( 0.6 kg BW and 0.9 kg BW per animal per day) in two equal meals. In addition, clean water was constantly available to them, while the manure was cleaned on a daily basis. The animals were initially fed with the control feed stock mixture (absence of microalgae), while in the following 10 days 30g of freeze dried Schizochytrium sp. were added to their feed.

A methane meter was installed inside the stable, as well as additional detectors for ammonia, carbon dioxide, temperature and humidity, as indicators of well-being. In addition, an air conditioning unit was installed in the area, in order for the animals to be in conditions of appropriate temperature and relative humidity (22-26°C and 40-70%, respectively), as these two factors may also affect the methane measurements. The recording of temperature and humidity was done with the help of the HOBO machine (HOBO logger) which is connected via Bluetooth to any smartphone device. Methane and ammonia were measured with the AEROQUAL Series 500 machine (two separate sensors), while carbon dioxide was monitored by a Dräger sensor connected.

Measurements of methane emissions showed a 17% reduction in gas emissions produced by animals of group 3 compared to animals of the control group. In particular, methane in the control group was estimated at 17.9 g/animal/day while the SC30 at 14.8 g/animal/day.

The specification is most thoroughly understood in light of the teachings of the references cited within the specification. The aspects within the specification provide an illustration of aspects of the invention and should not be construed to limit the scope of the invention. The skilled person readily recognizes that many other aspects are encompassed by the invention. All publications and/or patents cited in this disclosure are incorporated by reference in their entirety. To the extent the material incorporated by reference contradicts or is inconsistent with this specification, the specification will supersede any such material. The citation of any references herein is not an admission that such references are prior art to the present invention.

Reference throughout this specification to one embodiment or an embodiment means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment. Where reference is made to a numerical value using a term such as, for example, about or substantially, the exact numerical value is also disclosed. As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention may be referred to herein along with alternatives for the various components thereof. It is understood that such embodiments, examples, and alternatives are not to be construed as de facto equivalents of one another, but are to be considered as separate and autonomous representations of the present invention.

Those skilled in the art will recognize or be able to ascertain using no more than routine experimentation, many equivalents to the specific aspects of the invention described herein. Such equivalents are intended to be encompassed by the following claims.

## Claims

1. A ruminant concentrated feedstock comprising:
- a mixture containing maize grain, sunflower meal, wheat middling, barley, soyabean meal, calcium carbonate, sodium bicarbonate, minerals and vitamins mix, mycotoxin binder, yeast powder, and
- about 2 to 4 % w/w of a microalgae concentrate, preferably about 3 % w/w of a microalgae concentrate,
wherein said microalgal concentrate is a *Schizochytrium* sp. Concentrate, or a *Schizochytrium* sp. and *Nannochloropsis gaditana* concentrate.

2. The ruminant concentrated feed stock of claim 1, wherein said microalgae concentrate comprises 70 % w/w *Schizochytrium* sp. and 30% w/w *Nannochloropsis gaditana* concentrate,

3. The ruminant feed stock of claim 1, wherein said microalgae concentrate comprises 100 % w/w *Schizochytrium* sp concentrate.

4. A method of improving milk production of a ruminant, comprising:
- providing a ruminant concentrated feed stock of anyone of claims 1 to 3 along with a forage feed to said ruminant for ingestion; and
- collecting milk from said ruminant after the ruminant has ingested the ruminant feed, and wherein the concentration of docosahexaenoic acid and/or eicosapentaenoic acid and/or docosapentaenoic acid in said milk is increased compared to the concentration of docosahexaenoic acid and/or eicosapentaenoic acid and/ or dcosapentaenoic acid contained in milk produced by a ruminant fed by a concentrated feedstock which does not comprise a microalgae concentrate.

5. The method of claim 4,
wherein said forage comprises hay, preferably alfalfa hay, at about 45 to 50 % w/w, preferably 48 % w/w, of the total daily feed, and straw, preferably wheat straw, at about 3 to 6 % w/w of the total daily feed, preferably 4 % w/w of the total daily feed, and
wherein said concentrated feed stock comprises about 45 to 50 % w/w of the total daily feed, preferably 48 % w/w of the total daily feed, and wherein said concentrated feed stock comprises 1.5% w/w of a microalgae concentrate, preferably a *Schizochytrium* sp concentrate.

6. The method of claim 4
wherein said concentrated feed stock comprises 1.5% w/w of a microalgae concentrate, preferably a *Schizochytrium* sp and *Nannochloropsis gaditana* concentrate, more preferably a 70% w/w *Schizochytrium* sp and 30% w/w *Nannochloropsis gaditana* concentrate.

7. The method of claim 5 or 6,
wherein said concentrated feed stock comprises 1.5% w/w of a microalgae concentrate, preferably a *Schizochytrium* sp concentrate or a 70% w/w Schizochytrium sp and 30% w/w *Nannochloropsis gaditana* concentrate,
and 98.5 %w/w maize grain, sunflower meal, wheat middling, barley, soyabean meal, calcium carbonate, sodium bicarbonate, minerals and vitamins mix, mycotoxin binder, yeast powder, soyabean oil and palm oil.

8. The method of claim 7,
wherein said concentrated feed stock comprises 1.5% w/w of a microalgae concentrate, preferably a *Schizochytrium* sp concentrate, or a 70% w/w *Schizochytrium* sp and 30% w/ *Nannochloropsis gaditana* concentrate,
and maize grain 46,95% w/w, sunflower meal 8% w/w, wheat middling 7% w/w, barley 10% w/w, soyabean meal 18.5% w/w, premix of minerals and vitamins 2.5% w/w, calcium carbonate 1.4% w/w, sodium bicarbonate 0.3% w/w, mycotoxin binder 0.1% w/w, yeast powder 2.5% w/w, soyabean oil 0.25% w/w, palm oil 1% w/w

9. A method of preparing a ruminant feed mixture of any one of claims 1 to 3, comprising:
- preparing a first mixture containing maize grain, sunflower meal, wheat middling, barley, soyabean meal, calcium carbonate, sodium bicarbonate, minerals and vitamins mix, mycotoxin binder and yeast powder
- adding to said first mixture a microalgae concentrate.

10. The method of claim 9, wherein said method of preparing a ruminant feed mixture comprises:
- preparing a first mixture containing maize grain, sunflower meal, wheat middling, barley, soyabean meal, calcium carbonate, sodium bicarbonate, minerals and vitamins mix, mycotoxin binder and yeast powder
- adding to said first mixture a microalgae concentrate, wherein said microalgae concentrate has a concentration of about 2-4 % w/w, preferably 3 % w/w.

11. The method of claim 9 or 10, wherein said method of preparing a ruminant concentrated feed stock comprises:
- preparing a first mixture containing maize grain, sunflower meal, wheat middling, barley, soyabean meal, calcium carbonate, sodium bicarbonate, minerals and vitamins mix, mycotoxin binder and yeast powder
- adding to said first mixture a microalgae concentrate, wherein said microalgae concentrate is a *Schizochytrium* sp.concentrate, or a *Schizochytrium* sp. and *Nannochloropsis gaditana* concentrate

12. The method of any one of claims 9 to 11, wherein said method of preparing a ruminant concentrated feedstock comprises:
- preparing a first mixture containing maize grain, sunflower meal, wheat middling, barley, soyabean meal, calcium carbonate, sodium bicarbonate, minerals and vitamins mix, mycotoxin binder and yeast powder
- adding to said first mixture a microalgae concentrate, wherein said microalgae concentrate is a *Schizochytrium* sp. concentrate, preferably 3% w/w *Schizochytrium* sp. concentrate.

13. The method of any one of claims 9 to 11, wherein said method of preparing a ruminant concentrated feedstock comprises:
- preparing a first mixture containing maize grain, sunflower meal, wheat middling, barley, soyabean meal, calcium carbonate, sodium bicarbonate, minerals and vitamins mix, mycotoxin binder and yeast powder
- adding to said first mixture a microalgae concentrate, wherein said microalgae concentrate is a *Schizochytrium* sp. and *Nannochloropsis gaditana* concentrate, and wherein said concentrate comprises 70 % w/w *Schizochytrium* sp. and 30% w/w *Nannochloropsis gaditana* concentrate.

14. Use of a ruminant concentrated feed stock of any one of claims of 1 to 3 for improving milk production of a ruminant according to any one of claims 4 to 8.

15. A milk-derived product, preferably yogurt, produced by milk directly obtainable by the method of any one of claims 4 to 8.
